# EUROPÄISCHE PATENTSCHRIFT

(11) **EP 0 478 645 B1**
(45) Veröffentlichungstag und Bekanntmachung des Hinweises auf die Patenterteilung: **02.03.1994**
(21) Anmeldenummer: 90909677.8
(22) Anmeldetag: 12.06.1990
(51) Int. Cl.: H04N 5/76

(54) **VIDEORECORDER MIT ERZEUGUNG EINES TEXTSIGNALS**
VIDEO RECORDER WITH TEXT-SIGNAL GENERATION FACILITY
MAGNETOSCOPE AVEC PRODUCTION D'UN SIGNAL DE TEXTE

(30) Priorität: 21.06.1989 DE 3920234
(43) Veröffentlichungstag der Anmeldung: 08.04.1992
(73) Patentinhaber: DEUTSCHE THOMSON-BRANDT GMBH, 78048 Villingen-Schwenningen (DE)
(72) Erfinder: RAUSER, Horst, D-7730 Villingen (DE); HILLE, Dieter, D-7730 Villingen (DE); SOWIG, Helmut, D-7730 Villingen (DE)
(74) Vertreter: Einsel, Robert, Dipl.-Ing.
(86) Internationale Anmeldenummer: EP9000917
(87) Internationale Veröffentlichungsnummer: WO9016127

(56) Entgegenhaltungen:
- EP-A- 260 861
- FR-A- 2 613 163
- US-A- 4 700 221
- US-A- 4 789 905
- PATENT ABSTRACTS OF JAPAN VOLUME 13, NO. 333 (E-794)(3681) 26 JULY 1989, & JP-A- 19 70 83 (VICTOR CO OF JAPAN LTD) 14 APRIL 1981

## Beschreibung

Es sind Videorecorder bekannt, die einen Videotext-Decoder enthalten, der zusätzlich zu dem abgegebenen eigentlichen Signal in Form eines FBAS-Signals oder eines Antennen-Signals auch ein Videotext-Signal erzeugt, das auf dem Bildschirm des angeschlossenen Fernsehempfängers zusätzlich eine Schrift darstellen kann. Das im Videorecorder erzeugte Textsignal, z.B. in Form des RGB-Signals und eines zugehörigen Eintastsignals kann dem Fernsehempfänger an einem RGB-Eingang zugeführt oder im Videorecorder in das abgegebene FBAS-Signal eingefügt werden. Dabei ist die Zuführung an die RGB-Eingänge des Fernsehempfängers vorteilhafter, weil dann geringere Signalverzerrungen auftreten. Es gibt andererseits Fernsehempfänger mit oder ohne RGB-Eingang. Der Videorecorder hat indessen keine Information darüber, ob der Fernsehempfänger einen RGB-Eingang hat oder ob dieser im Fernsehempfänger überhaupt beschaltet ist. Es wäre also vorteilhaft, wenn der Videorecorder selbsttätig das Vorhandensein eines RGB-Eingangs erkennt und abhängig davon bei Vorhandensein des RGB-Einganges das Textsignal dem RGB-Eingang zuführt und bei Fehlen des RGB-Einganges oder nicht beschaltetem RGB-Eingang das Textsignal in das abgegebene FBAS-Signal einfügt.

Der Erfindung liegt die Aufgabe zugrunde, den Videorecorder so auszubilden, daß er das Vorhandensein eines wirksamen RGB-Eingangs im Fernsehempfänger erkennt und in Abhängigkeit davon die entsprechende Umschaltung hinsichtlich der Zuführung des Textsignals durchführt.

Diese Aufgabe wird durch die im Anspruch 1 angegebene Erfindung gelöst. Vorteilhafte Weiterbildungen der Erfindung sind in den abhängigen ansprüchen angegeben.

Bei der Erfindung wird also ein Spannungsabfall am Ausgang des Recorders, der sich durch den Innenwiderstand im Recorder und den gleich großen Eingangswiderstand des Fernsehempfängers ergibt, in vorteilhafter Weise als Kennung dafür ausgenutzt, daß der Fernsehempfänger an dem RGB-Eingang beschaltet ist und somit RGB-Signale verarbeiten kann. Dabei wird davon ausgegangen, daß dann, wenn der Fernsehempfänger RGB-Signale nicht verarbeiten kann, an dem entsprechenden Eingang auch der Eingangswiderstand nicht wirksam ist, der Anschluß also offen ist. Es kann somit eine Schaltspannung gewonnen werden, die die Anwesenheit eines wirksamen RGB-Einganges des Fernsehempfängers anzeigt. Diese Schaltspannung kann dann dazu dienen, im Recorder selbst eine Umschaltung derart vorzunehmen, das die Textsignale bei vorhandenem RGB-Eingang dem RGB-Eingang zugeführt werden und bei nichtvorhandenem RGB-Eingang in das dem Fernsehempfänger zugeführte FBAS-Signal eingefügt werden.

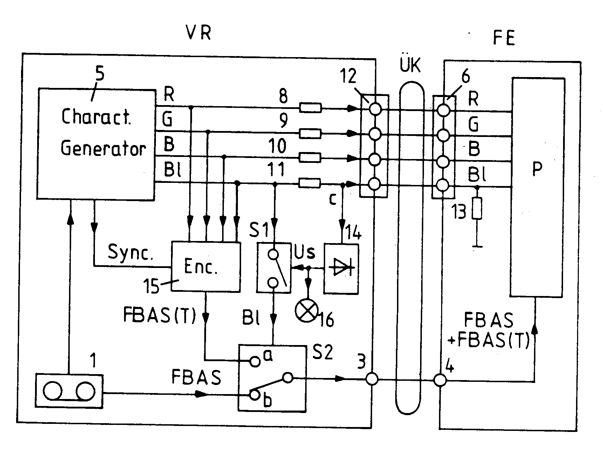

Die Erfindung wird anhand der Zeichnung an einem Ausführungsbeispiel erläutert.

Die Figur zeigt den Videorecorder VR, der über das Kabel ÜK an den Fernsehempfänger FE angeschlossen ist. Der Fernsehempfänger FE dient zur Wiedergabe des mit dem Videorecorder VR aufgezeichneten Signals und gegebenenfalls zusätzlich eines Videotextsignals, das vom Recorder oder auch vom Antenneneingang kommen kann. Die Aufzeichnungseinheit 1 liefert zunächst das übliche, das bewegte Bild darstellende FBAS-Signal. Dieses gelangt über den Schalter S2 in der Stellung b, den Ausgang 3 des Recorders VR, den Eingang 4 des Fernsehempfängers FE auf den Prozessor P, der die Signalverarbeitung zur Erzeugung der Signale für die Steuerung der Bildröhre bewirkt.

In dem Charaktergenerator 5 des Videorecorders VR werden zusätzlich Signale R, G, B erzeugt, die während einiger Zeilen des Bildes und auch während eines ganzen Bildes ein Textsignal zur Wiedergabe einer Schrift darstellen. Der Generator 5 erzeugt außerdem ein Tastsignal B1 (blanking signal), das während der Zeilen mit Textwiedergabe oder während eines Teiles der Zeilen anwesend ist und eine Umschaltung auf Textwiedergabe bewirkt. Die Signale RGB können dem Fernsehempfänger FE über zwei Wege zugeführt werden. Die eine Möglichkeit ist der RGB-Eingang 6 des Fernsehempfängers FE. Die andere Möglichkeit ist eine Einfügung in das dem Eingang 4 zugeführte FBAS-Signal. Die Zuführung zum Eingang 6 ist wegen einer geringeren Qualitätsverringerung vorteilhaft, aber nur im Falle einer Beschaltung des Eingangs 6 möglich. Der Videorecorder VR erkennt jetzt selbsttätig, ob der Eingang 6 beschaltet ist und ob das Signal RGB dem Eingang 6 zugeführt werden kann oder in das FBAS-Signal eingefügt werden muß. Diese beiden Fälle werden im folgenden erläutert:
1. Der Fernsehempfänger hat einen wirksamen RGB-Eingang. Die RGB-Signale und das Tastsignal B1 gelangen über die die Innenwiderstände darstellenden Widerstände 8, 9, 10, 11 von je 75 Ohm, den RGB-Ausgang 12 des Recorders VR, das Kabel ÜK auf den RGB-Eingang 6 des Fernsehempfänger FE und können dort während ihrer Anwesenheit,definiert durch den Impuls B1, eine Umschaltung auf Textwiedergabe und die Textwiedergabe selbst bewirken. Der Impuls B1 ist ein Schaltimpuls und hat eine konstante Amplitude.Durch die Wirkung des Widerstandes 11 und des gleich großen Eingangswiderstandes 13 von je 75 Ohm wird die Amplitude des Impulses B1 am Punkt c auf 50 % abgesenkt. Diese Amplitudenabsenkung wird in dem Amplitudendetektor 14 detektiert. Es wird daraus eine Schaltspannung Us gewonnen, die den Schalter S1 öffnet.
   Die Tastimpulse B1 vom Ausgang des Generators 5 gelangen daher nicht auf den Schalter S2. Der Schalter S2 bleibt daher in der Stellung b, so daß das FBAS-Signal ungeändert zum Ausgang 3 gelangt. Eine Einfügung des Textsignals mit dem Schalter S2 in das FBAS-Signal ist dann nicht notwendig und wäre unsinnig, weil das Textsignal bereits dem Eingang 6 zugeführt und von dort im Prozessor P für die Bildwiedergabe verarbeitet wird.
2. Der Fernsehempfänger enthält keinen wirksamen RGB- Eingang. Wenn der Fernsehempfänger FE keinen wirksamen RGB-Eingang 6 hat, fehlt auch der den Innenwiderstand darstellende Widerstand 13. Der Punkt c ist dann durch den Fernsehempfänger FE nicht belastet. Am Punkt c erscheint daher das Tastsignal B1 mit voller Amplitude, wenn der Eingang des Amplitudendiskrimators hochohmig ist. Diese volle Amplitude wird in dem Amplitudendiskriminator 14 detektiert. Darauf ändert sich die Schaltspannung Us und schließt den Schalter S1. Das Tastsignal B1 gelangt jetzt als Steuersignal auf den Schalter S2. Dadurch wird S2 jeweils während der Anwesenheit eines Textsignals, also z.B. während mehrerer Zeilen, während eines Teiles mehrerer Zeilen oder auch während eines ganzen Bildes in die Stellung a umgelegt. Dadurch gelangt ein das Textsignal darstellendes FBAS(T)-Signal vom Ausgang des Encoders 15, der mit den Signalen RGB, B1 und einem Synchronisiersignal gespeist ist, auf den Ausgang des Schalters S2. Während des Vorhandenseins des Textsignals wird also das FBAS-Signal von der Aufzeichnungseinheit 1 abgeschaltet und statt dessen das FBAS(T)-Signal für das Textsignal eingefügt, gewissermaßen "eingestanzt". Während dieser Zeit wird dem Ausgang 3 und dem Eingang 4 ein FBAS(T)-Signal zugeführt, das eine Schrift darstellt. Die Signale RBG gelangen zwar trotzdem auf den Eingang 6. Da dieser Eingang aber nicht beschaltet ist, haben sie dort keine Wirkung.
   Das Signal am Ausgang des Encoders 15 kann auch ein reines Graustufen-Helligkeitssignal sein, das während der Textwiedergabe mit dem Schalter S2 eingefügt wird. Die Steuerspannung für den Amplitudendiskriminator 14 könnte auch von einem der Signale RGB am Ausgang 12 abgeleitet werden. Dabei wird z.B. über einen längeren Zeitraum, in dem mit Sicherheit Signale RGB auftreten, deren Amplitude gemessen. Das ist deshalb möglich, weil die Signale RGB für die Textwiedergabe entweder die Amplitude O oder die volle Amplitude entsprechend der vollen Farbsättigung haben. Deshalb kann auch an den RGB-Ausgängen ein Amplitudenabfall aufgrund eines Eingangswiderstandes des Fernsehempfängers FE detektiert werden. Die RGB-Eingänge am Eingang 6 sind ebenfalls über nicht dargestellte Widerstände von 75 Ohm abgeschlossen.
   Die Tatsache, daß der Fernsehempfänger FE einen wirksamen RGB-Eingang hat, wird im Recorder VR zusätzlich mit einer Einzeigelampe 16 angezeigt. Der Bedienende weiß dann, daß der angeschlossene Fernsehempfänger einen wirksamen RGB-Eingang hat und somit andere Signalgeber mit RGB-Ausgang wie z.B. ein anderer Videorecorder, ein Textsignalgenerator oder eine Kamera an diesen Eingang angeschlossen werden können.

## Patentansprüche

1. Videorecorder mit Erzeugung eines Textsignals, das entweder einem RGB-Eingang (6) eines Fernsehempfängers (FE) zugeführt oder in ein dem Fernsehempfänger zugeführtes FBAS-Signal eingefügt wird, **dadurch gekennzeichnet**, daß aus dem Spannungsabfall am RGB-Ausgang (12) des Recorders (VR) aufgrund des Innenwiderstandes (13) des RGB-Eingangs (6) des Fernsehempfängers (FE) eine Schaltspannung (Us) gewonnen wird, die bei nicht beschaltetem RGB-Eingang (6) des Fernsehempfängers (FE) die Einfügung des Textsignals (FBAS(T)) in das FBAS-Signal bewirkt.

2. Recorder nach Anspruch 1, **dadurch gekennzeichnet**, daß das in das FBAS-Signal eingefügte Signal ein in einer Matrix oder einem Encoder (15) aus den RGB-Signalen gewonnenes Graustufensignal oder FBAS-Signal ist.

3. Recorder nach Anspruch 1, **dadurch gekennzeichnet**, daß der Spannungsabfall an einem Ausgang (c) für ein TextEintastsignal (B1) ermittelt wird.

4. Recorder nach Anspruch 1, **dadurch gekennzeichnet**, daß die Schaltspannung (Us) einen Schalter (S1) betätigt, der ein Text-Eintastsignal (B1) an den Steuereingang eines weiteren Umschalters (S2) anlegt, der die Einfügung des Textsignals in das FBAS-Signal bewirkt.

5. Recorder nach Anspruch 1, **dadurch gekennzeichnet**, daß die Schaltspannung (Us) im Recorder (VR) zusätzlich eine Anzeige (16) dafür betätigt, daß der angeschlossene Fernsehempfänger (FE) einen wirksamen RGB-Eingang (6) aufweist.

## Claims

1. Video recorder with text signal generation, which is either supplied to an RGB input (6) of a television receiver (FE), or inserted into a composite colour signal (FBAS) supplied to the television receiver, characterised in that, from the voltage drop at the RGB output (12) of the recorder (VR) due to the internal resistance (13) of the RGB input (6) of the television receiver (FE), a switching voltage (Us) is obtained which effects the insertion of the text signal (FBAS(T)) in the composite colour signal when the RGB input (6) of the television receiver (FE) is not connected.

2. Recorder according to claim 1, characterised in that the signal inserted in the composite colour signal is a grey scale signal or composite colour signal obtained from the RGB signals in a matrix or an encoder (15).

3. Recorder according to claim 1, characterised in that the voltage drop is sensed at an output (c) for a text blanking signal (BI).

4. Recorder according to claim 1, characterised in that the switching voltage (Us) operates a switch (S1) which applies a text blanking signal (BI) to the control input of a further switch (S2), which effects the insertion of the text signal in the composite colour signal.

5. Recorder according to claim 1, characterised in that the switching voltage (Us) additionally operates an indicator (16) in the recorder (VR), to confirm that the television receiver (FE) connected thereto is provided with an effective RGB input (6).

## Revendications

1. Magnétoscope avec production d'un signal de texte qui est soit amené à une entrée rouge-jaune-bleu (6) d'un récepteur de télévision (FE), soit inséré dans un signal composé de chrominance (FBAS) amené au récepteur de télévision, **caractérisé en ce** qu'une tension de commutation (Us) est obtenue à partir de la chute de tension à la sortie rouge-jaune-bleu (12) du magnétoscope (VR) en raison de la résistance intérieure (13) de l'entrée rouge-jaune-bleu (6) du récepteur de télévision (FE), tension qui, lorsque l'entrée rouge-jaune-bleu (6) du récepteur de télévision (FE) n'est pas en circuit, provoque l'insertion du signal de texte (FBAS(T)) dans le signal composé de chrominance (FBAS).

2. Magnétoscope selon la revendication 1, **caractérisé en ce** que le signal inséré dans le signal composé de chrominance (FBAS) est un signal de gris ou un signal composé de chrominance (FBAS) obtenu dans une matrice ou un codeur (15) à partir des signaux rouge-jaune-bleu.

3. Magnétoscope selon la revendication 1, **caractérisé en ce** que la chute de tension est détectée à une sortie (c) pour un signal de suppression de texte (B1).

4. Magnétoscope selon la revendication 1, **caractérisé en ce** que la tension de commutation (Us) actionne un commutateur (S1) qui applique un signal de suppression de texte (B1) à l'entrée de commande d'un autre commutateur (S2) qui provoque l'insertion du signal de texte dans le signal composé de chrominance (FBAS).

5. Magnétoscope selon la revendication 1, **caractérisé en ce** que la tension de commutation (Us) dans le magnétoscope (VR) actionne pour cela en plus une indication (16) selon laquelle le récepteur de télévision raccordé (FE) présente une entrée rouge-jaune-bleu active (6).
